# EUROPÄISCHE PATENTSCHRIFT

(11) **EP 0 890 055 B1**
(45) Veröffentlichungstag und Bekanntmachung des Hinweises auf die Patenterteilung: **11.09.2002**
(21) Anmeldenummer: 97918024.7
(22) Anmeldetag: 13.03.1997
(51) Int. Cl.: F16L 41/06, G01L 19/00

(54) **VORRICHTUNG ZUM ANSCHLUSS EINES DEN DRUCK VON FLUIDEN MESSENDEN GERÄTES**
DEVICE FOR CONNECTING A FLUID-PRESSURE-MEASURING APPARATUS
DISPOSITIF PERMETTANT DE RACCORDER UN APPAREIL MESURANT LA PRESSION DE FLUIDES

(30) Priorität: 05.04.1996 DE 19613687
(43) Veröffentlichungstag der Anmeldung: 13.01.1999
(73) Patentinhaber: BKM BOLENDER-KUBITZ MASCHINENKONSTRUKTION GMBH, 58093 Hagen (DE)
(72) Erfinder: BOLENDER, Klaus, D-58119 Hagen (DE)
(74) Vertreter: Köchling, Conrad-Joachim
(86) Internationale Anmeldenummer: DE9700515
(87) Internationale Veröffentlichungsnummer: WO97038257

(56) Entgegenhaltungen:
- EP-A- 0 310 601
- EP-A- 0 429 904
- US-A- 3 115 889
- US-A- 3 198 206
- US-A- 3 606 398
- US-A- 3 762 263
- US-A- 4 611 624

## Beschreibung

Die Erfindung betrifft eine Vorrichtung zum Anschluss eines den Druck von Fluiden, insbesondere Hydrauliköl, messenden Gerätes an eine unter Fluiddruck stehende oder drucklose, mit Fluid beaufschlagbare Rohrleitung Vorrichtung zum Anschluss eines den Druck von Fluiden messenden Gerätes an eine unter Fluiddruck stehende oder drucklose, mit Fluid beaufschlagbare Rohrleitung mit einer an die Rohrleitung radial dicht schließend anspannbaren Klemmschelle, in deren einem Schellenbügel eine radial zum Mantel der Rohrleitung gerichtete, axial geführte Nadel begrenzt axial verstellbar geführt ist, wobei die Nadel mittels einer mit dem Schellenbügel gewindemäßig verbundenen Gewindespindel, die koaxial zur Nadellängsachse gerichtet ist, axial verschiebbar ist, und wobei vorzugsweise der Schellenbügel eine Bohrung aufweist, an die ein Druckmessgerät anschließbar ist und die mit der Leckstelle des Rohres, die durch die Nadel erzeugbar ist, in leitungsoffener Verbindung steht, wobei ferner die Gewindespindel eine koaxial gerichtete Sacklochbohrung aufweist, in die der Schaft der Nadel koaxial einsteckbar ist, und zwischen dem Boden der Sacklochbohrung und der dem Boden zugewandten Stirnfläche des Schaftes der Nadel Zentriermittel ausgebildet oder angeordnet sind, mittels derer eine Selbstzentrierung der Nadel erfolgt.

Eine gattungsgemäße Vorrichtung ist aus der US-A-3,762,263 bekannt. Allerdings ist mit der bekannten Vorrichtung lediglich ein Loch in ein Rohr einzubringen. Der Durchfluss von fluiden Medien, insbesondere Hydrauliköl durch diese Bohrung und durch die Vorrichtung beispielsweise zum Zwecke des Anschlusses eines Druckmessgerätes, ist dort aber nicht vorgesehen.

Eine weitere, ähnliche Vorrichtung ist beispielsweise aus der US-A-3 198 206 bekannt. Bei der bekannten Vorrichtung ist eine Druckmessschelle mit zwei Schellenbügeln bekannt, die aneinander mittels Schrauben befestigt sind. In dem einen Schellenbügel ist eine axial geführte Nadel gehaltert, die mittels einer Gewindespindel axial verstellbar ist. Die Gewindespindel ist durch einen am Schellenbügel angeformten Gewindestutzen und eine auf diesen aufgeschraubte Gewindekappe gebildet. Die Gewindekappe weist eine exzentrische Lochung auf, durch die ein mit Kopf versehener Bestandteil der Nadel geführt werden kann. Die Nadel wird dabei bei gelöster Gewindekappe exzentrisch in die Kappe axial eingeschoben und dann querverschoben, woraufhin die Kappe dann auf die Gewindeausbildung des Schellenbügels aufgeschraubt werden kann und ein im Wesentlichen zentrischer Sitz der Nadel erreicht ist.

Die Nadel ist ein hochempfindliches Werkzeug, welches beispielsweise aus gehärtetem Stahl bestehen kann. Sofern eine solche Einrichtung zum Lochen von entsprechenden metallischen Rohrleitungen benutzt wird, so besteht die Gefahr, dass die Nadel aufgrund der nicht einwandfreien axialen Führung durch Querkräfte belastet wird, so dass es zum Nadelbruch kommt. Bei der gewählten Ausbildung gemäß Stand der Technik ist es nicht auszuschließen, dass bei der Betätigung der Vorrichtung ein "Eiern" der Nadel erfolgt, was dazu führt, dass die Nadel Seitendruck bekommt und brechen kann. Im Übrigen ist die Vorrichtung gemäß Stand der Technik relativ kompliziert im Aufbau, in der Handhabung und Montage.

Aus der EP-PS 03 10 601 B1 ist eine ähnliche Vorrichtung zum Anschluss eines den Druck von Fluiden messenden Gerätes an eine unter Mediumdruck stehende Rohrleitung bekannt, bei der die Rohrleitung mittels eines Spritzbohrers angeschnitten wird, der lediglich Fließspäne erzeugt. Alternativ ist dort auch vorgeschlagen, dass mittels eines Dornes die Rohrwandung durchbohrt werden kann, ohne dass Späne erzeugt werden.

Auch bei solchen Vorrichtungen ist es nicht auszuschließen, dass beim Einschrauben des Bohrers oder des Dornes ein "Eiern" des gedrehten Elementes erfolgt, was dazu führt, dass dieses Element Seitendruck bekommt und brechen kann.

Aus der EP-A-0 429 904 ist eine ähnliche Vorrichtung bekannt, mit der eine Fluid führende Leitung angestochen und Flüssigkeit aus der Leitung abgeführt werden kann. Hierbei erfolgt eine seitliche Abführung der Flüssigkeit aus der angestochenen Leitung, was insofern nachteilig ist, als dass seitlich neben der Vorrichtung ein Montage- und Anordnungsraum zu Verfügung stehen muss. Eine enge Installation ist für eine solche Ausbildung nicht brauchbar.

Ausgehend von diesem Stand der Technik liegt der Erfindung die Aufgabe zugrunde, eine Vorrichtung gattungsgemäßer Art zu schaffen, bei der die Gefahr des Nadelbruches weitestgehend vermieden ist, und bei der eine zentrale und axiale Anordnung des anzuschließenden Druckmessgerätes ermöglicht ist.

Die Lösung dieser Aufgabe ist im Anspruch 1 angegeben.

Die erfindungsgemäße Ausbildung ist sowohl bei Vorrichtungen brauchbar, die lediglich dazu dienen, eine drucklose Rohrleitung zu lochen, um anschließend eine Messschelle mit Anschluss für ein Druckmessgerät an dieser Stelle anordnen zu können. Die Vorrichtung ist aber auch für eine kombinierte Vorrichtung brauchbar, in die eine Anschlussleitung für eine Druckmesseinrichtung integriert ist. In diesem Falle kann auch das Anschneiden einer unter Druck stehenden Rohrleitung erfolgen, wobei der Druck dann durch die angeschlossene Druckmesseinrichtung unmittelbar erfasst werden kann.

Die erfindungsgemäße Ausbildung stellt eine Vorrichtung zur Verfügung, bei der die Nadel zwängungsfrei selbst zentriert ist, so dass bei einer Betätigung der Gewindespindel und einem entsprechenden Vortreiben der Nadel zu der Wandung des eingespannten Rohres gewährleistet ist, dass die Nadel weitestgehend von Querkräften freigehalten ist eine Bruchgefahr also nicht besteht. Zudem ist die Ausbildung unkompliziert in der Handhabung und Fertigung, da es lediglich erforderlich ist, die Gewindespindel als Gewindebolzen mit Sacklochbohrung auszubilden, wobei die Gewindespindel in eine entsprechende Gewindebohrung des Schellenbügels der Messschelle einschraubbar ist. Dadurch, dass sich die Nadel lediglich mit ihrer Stirnfläche mittelbar oder unmittelbar an der Bodenfläche der Sacklochbohrung abstützt und zwischen diesen Flächen oder an diesen Flächen Zentriermittel ausgebildet sind, wird eine Selbstzentrierung der Nadel beim Betätigen der Gewindespindel erreicht.

Die Ausbildung, wonach die Stirnfläche des Schaftes der Nadel konvex gewölbt ist oder als Zentrierkugel ausgebildet ist und zwischen dieser Stirnfläche und dem Sacklochboden zwei kreisringartige Tellerfedern angeordnet sind, ist für die gewünschte zwängungsfreie Selbstzentrierung sehr förderlich, wobei sich die eine der beiden Tellerfedern am Boden des Sackloches abstützen kann und die andere an der Stirnfläche des Schaftes der Nadel. Die beiden Tellerfedern können sich relativ zueinander drehen, sofern sie beispielsweise durch Materialrauhigkeiten oder sonstige Besonderheiten reibend an dem Sacklochboden oder an der Stirnfläche der Nadel anliegen. Die Anordnung der Tellerfedern gewährleistet zudem, dass eine relative Verschiebung der Nadel möglich ist, ohne dass hierbei Querkräfte auf die Nadel einwirken. Hierzu ist insbesondere auch die konvexe Wölbung der Stirnfläche der Nadel oder die Ausbildung als Zentrierkegel förderlich.

Bei der erfindungsgemäßen Anordnung ist es möglich, dass nach dass nach dem Anstechen der Rohrleitung das Fluid, welches in der Rohrleitung unter Druck ansteht, entlang der zurückgezogenen Nadel auch im Bereich der ersten Führungshülse und im Bereich der Sacklochbohrung fließen kann, so dass an geeigneter Stelle eine Anschlussbohrung zum Anschluss eines Druckmessgerätes angeordnet werden kann. Um eine zentrale und axiale Anordnung des Druckmessgerätes zu ermöglichen, ist zudem vorgesehen, dass die Stirnfläche des Nadelschaftes mindestens einen Querschlitz aufweist, der den radialen Fluiddurchtrittsspalt mit der Mittellochung oder Tellerfedern verbindet, und dass axial vom Sacklochboden die Bohrung zum Anschluss eines Druckmessgerätes abgeht.

Auf diese Weise wird eine zentrale Abführung des Druckmittels zu der koaxial zur Nadel liegenden Bohrung im Sacklochboden gewährleistet, so dass eine exakt axiale Anordnung und Ausrichtung ermöglicht ist.

Eine solche Ausbildung ist aus Platzgründen zum Anschluss der Druckmesseinrichtung bei verlegten Rohrleitungen äußerst hilfreich, da häufig seitlich kein Einbauraum für eine Druckmesseinrichtung oder dergleichen vorhanden ist.

Eine besonders bevorzugte Weiterbildung wird zudem darin gesehen, dass die zweite Führungshülse in die von der Nadel durchgreifbare Bohrung des Schellenbügels fest eingesetzt, insbesondere eingepresst ist, in den Schellenbügel eine der Form des umschlossenen Rohres angepasste und an dessen Mantel anliegende, metallische Halbschale eingelegt ist, dass die Halbschale eine kreisförmige oder kreisartige Ausnehmung aufweist, in die ein O-Ring eingelegt ist, dass der O-Ring sich radial außen an die Randkante der Ausnehmung, an den Rohrmantel und an einen Teilbereich des Innenmantels des Schellenbügels sowie radial innen an dem Außenmantel der zweiten Führungshülse in dem Bereich dichtend abstützt, der axial über den Schellenbügel-Innenmantel vorragt.

Hierdurch wird eine sichere Abdichtung auch bei unter hohen Drücken stehenden Rohrleitungen gewährleistet.

Besonders bevorzugt ist dabei, dass die als Stützfläche für den O-Ring dienende Randkante der Ausnehmung der Halbschale so ausgerichtet ist, dass sie Bestandteil eines Kegelmantels ist, dessen Spitze in der Mittelachse des umfassten Rohres liegt.

Diese Ausbildung ist der sicheren Abdichtung auch bei hohen anstehenden Drücken förderlich.

Unter Umständen kann auch bevorzugt sein, dass der Boden der Sacklochbohrung der Gewindespindel konkav oder kegelig gehöhlt ist.

Bevorzugt ist zudem vorgesehen, dass die Nadel aus gehärtetem Stahl und die Schellenbügel aus weichem Stahl, insbesondere Automatenstahl, besteht.

Ausführungsbeispiele der Erfindung sind in der Zeichnung dargestellt und im Folgenden näher beschrieben.

Es zeigt:
- Fig. 1 und 2: eine erste Ausführungsform in Seitenansicht, teilweise in Schnittdarstellung;
- Fig. 3 bis 5: die Vorrichtung in unterschiedlichen Positionen;
- Fig. 6 und 7: eine Variante in der Ansicht gemäß Figur 1 gesehen.

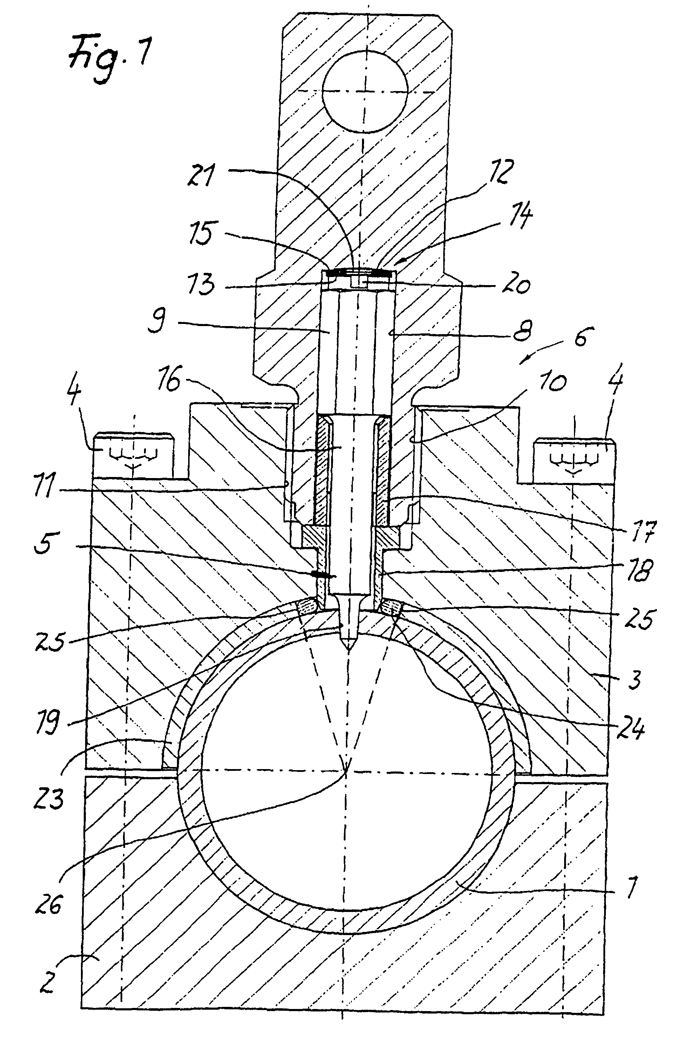

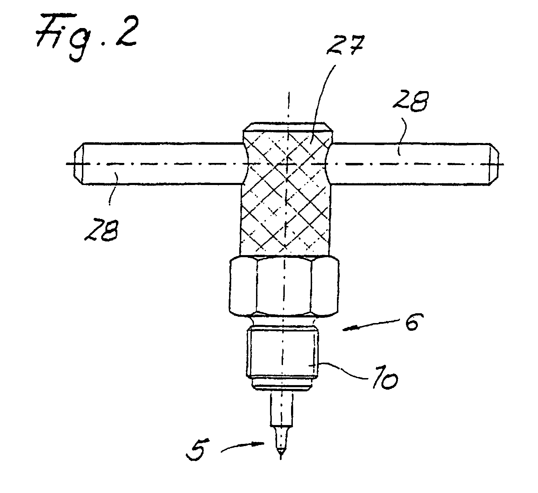

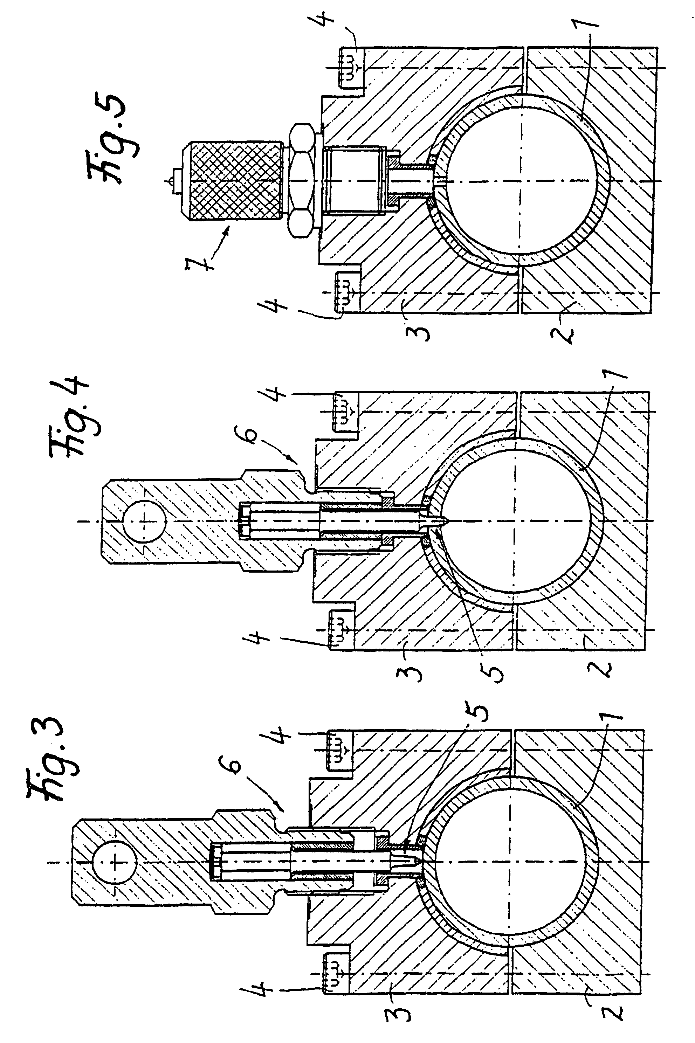

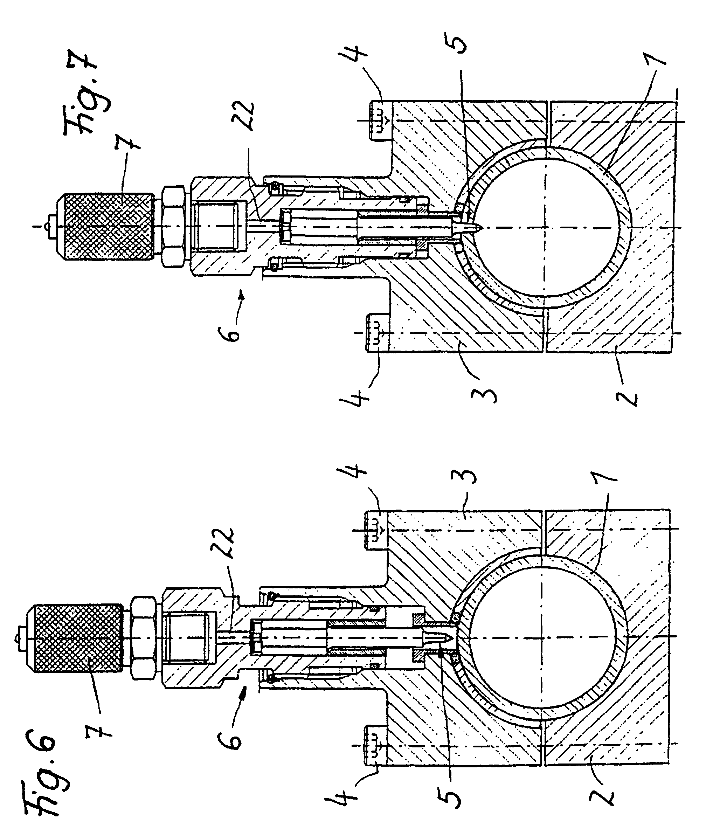

In den Figuren 1 bis 5 ist eine erfindungsgemäße Vorrichtung gezeigt, die keinen Druckabnahmestutzen aufweist, sondern lediglich dazu dient, zunächst an einem drucklosen Rohr benutzt zu werden, wobei gemäß Figur 3 zunächst eine entsprechende Anordnung erfolgt, anschließend gemäß Figur 4 das entsprechende Loch in die Rohrwandung eingestochen wird. Nachträglich kann dann die eigentliche Lochungseinrichtung, die in Figur 2 allein dargestellt ist, entfernt werden und eine Meßschelle mit Meßanschluß gemäß Figur 5 an der Lochungsstelle aufgebracht werden. Bei der Ausführungsform gemäß Figur 6 und 7 ist der Meßanschluß in die Lochungseinrichtung integriert.

In den Zeichnungen ist eine Vorrichtung zum Anschluß eines den Druck von Fluiden, beispielsweise Hydrauliköl, messenden Gerätes an eine unter Fluiddruck stehende oder auch drucklose, mit Fluid beaufschlagbare Rohrleitung 1 gezeigt. Die Vorrichtung besteht aus einer an die Rohrleitung 1 radial dichtschließend anspannbaren Klemmschelle mit zwei Schellenbügeln 2 und 3. Die Schellenbügel sind über Schrauben 4 miteinander verbunden. In dem einen Schellenbügel 3 ist eine radial zum Mantel der Rohrleitung 1 gerichtete, axial geführte Nadel 5 begrenzt axial verstellbar geführt, wobei die Nadel mittels einer mit dem Schellenbügel 3 gewindemäßig verbundenen Gewindespindel 6, die koaxial zur Nadellängsachse gerichtet ist, axial verschiebbar.

Bei der Ausführungsform gemäß Figur 6 und 7 weist der Schellenbügel 3 mittelbar eine Bohrung auf, an die ein Druckmeßgerät bei 7 anschließbar ist. Diese steht mit der Leckstelle des Rohres 1, die durch die Nadel 5 erzeugt ist, in leitungsoffener Verbindung.

Erfindungsgemäß weist die Gewindespindel 6 eine koaxial gerichtete Sacklochbohrung 8 auf, in die der Schaft 9 der Nadel 5 koaxial einsteckbar ist. Die Gewindespindel 6 besteht dabei aus einem bolzenartigen Teil mit Außengewinde 10, das in eine entsprechende Stufenbohrung 11 des Schellenbügels 3 einschraubbar ist.

Zwischen dem Boden 12 der Sacklochbohrung 8 und der dem Boden 12 zugewandten Stirnfläche 13 des Schaftes 9 der Nadel 5 sind Zentriermittel angeordnet oder ausgebildet, mittels derer eine zwängungsfreie Selbstzentrierung der Nadel erfolgt.

Bei den in der Zeichnung dargestellten Ausführungsformen ist die Stirnfläche 13 des Schaftes 9 der Nadel 5 konvex gewölbt oder auch als Zentrierkegel vorragend ausgebildet. Zwischen dieser Stirnfläche 13 und dem Boden 12 des Sackloches 8 sind zwei kreisringartige Tellerfedern 15 angeordnet. Die Nadel 5 weist im Anschluß an die Stirnfläche 13 zunächst einen zurückgesetzten zylindrischen Bereich auf, an den sich ein erster polygonaler Schaftbereich anschließt. Durch die Polygonausbildung des Schaftes wird im Zusammenhang mit dem kreisrunden Querschnitt der Sacklochbohrung 8 ein Weg zum Durchtritt von Fluiden erreicht.

Aus dem gleichen Grunde ist der Schaft anschließend verjüngt (bei 16), wobei diese Verjüngung 16 in eine in der Sacklochbohrung 8 gehalterte, bis zu der Mündung des Sackloches reichende, erste Führungshülse 17 eingesetzt ist. Die Führungshülse weist über einen Teil ihres Längsverlaufes axiale Stützrippen 18 auf, so daß auch hier ein axialer Durchgangsweg für anstehendes Fluid geschaffen ist. Anstelle von Stützrippen können auch Nuten ausgebildet sein.

Nachfolgend ist eine im Schellenkörper 3 fixierte zweite Führungshülse 18 vorgesehen, die von dem Schaftbereich 16 der Nadel 5 mit geringem Spiel durchgriffen ist, so daß auch hier Fluiddurchtritt möglich ist. Allerdings ist dieser Fluiddurchtritt nicht unbedingt erforderlich, sondern der Schaft der Nadel 5 könnte auch von der Führungshülse 18 eng umgriffen sein, da die Nadel nach dem Lochen des Rohres 1 zurückgezogen werden kann, so daß dann ein Weg für den Durchtritt von Fluid gegeben ist.

Insgesamt wird durch diese Ausbildung ein Fluiddurchtrittsspalt von der zu erzeugenden Leckstelle (bei 19) bis zum Boden des Sackloches 8 gebildet, von dem die Bohrung zum Anschluß eines Druckmeßgerätes abgehen kann.

Um eine koaxiale Anordnung des Abgangsstutzens oder dergleichen zu erreichen, wie dies insbesondere aus Figur 6 und 7 ersichtlich ist, weist die Stirnfläche 13 des Nadelschaftes einen Querschlitz 20 auf, der den radialen Fluiddurchtrittsspalt mit der Mittellochung 21 der Tellerfedern 15 verbindet. Wie aus Figur 6 und 7 ersichtlich, kann hiervon axial die Bohrung 22 zum Anschluß eines Druckmeßgerätes 7 abgehen, wobei diese Bohrung als Stufenbohrung ausgebildet ist. Es ist somit eine exakt axiale Anordnung des Elementes 7 möglich, was aus Zugänglichkeitsgründen häufig bevorzugt ist.

Vorzugsweise ist die zweite Führungshülse 18 in die von der Nadel 5 durchgreifbare Bohrung des Schellenbügels 3 fest eingesetzt, beispielsweise eingepreßt, um eine Leckage zwischen Führungshülse und umgebendem Schellenbügelmaterial zu vermeiden.

In den Schellenbügel 3 ist eine der Form des umschlossenen Rohres 1 angepaßte, an dessen Mantel anliegende, metallische Halbschale 23 angelegt. Die Halbschale 23 weist eine kreisförmige oder kreisartige Ausnehmung auf, in die ein O-Ring 24 eingelegt ist. Der O-Ring 24 stützt sich radial außen an der Randkante 25 der Ausnehmung der Halbschale 23 an. Ferner stützt sich der O-Ring an den Mantel des Rohres 1 und an einem Teilbereich des Innenmantels des Schellenbügels 3 sowie radial innen an dem Außenmantel der zweiten Führungshülse 18 dichtend ab. Dieser Bereich ragt über den Innenmantel des Schellenbügels 3 vor. Besonders vorteilhaft ist, wenn die als Stützfläche für den O-Ring 24 dienende Randkante 25 der Ausnehmung der Halbschale 23 so ausgerichtet ist, daß sie Bestandteil eines Kegelmantels ist, dessen Spitze in der Mittelachse 26 des umfaßten Rohres 1 liegt. Auf diese Weise wird eine sichere Abdichtung auch bei sehr hohen Drücken erreicht.

Die Nadel 5 besteht vorzugsweise aus gehärtetem Stahl, während die Schellenbügel 2, 3 aus gut bearbeitbarem Stahl, beispielsweise Automatenstahl bestehen.

Eine mögliche Handhabung der Vorrichtung ist in den Figuren 3 bis 5 erläutert. Zunächst kann die Klemmschelle mit ihren Schellenbügeln 2, 3 auf das Rohr aufgesetzt werden, wie aus Figur 3 veranschaulicht. Anschließend kann dann das Werkzeugelement gemäß Figur 2 mit der Nadel 5 eingeschraubt werden, wobei an dem bolzenartigen Oberteil 27 eine Drehhandhabe 28 angeordnet sein kann. Die Gewindespindel wird dann in die entsprechende Gewindebohrung des Schellenbügels 3 eingeschraubt, wie aus Figur 3 ersichtlich. Mit zunehmendem Vortrieb wird die Nadel 5 durch die Wandung des Rohres 1 gedrückt, wie in Figur 4 veranschaulicht. Anschließend kann die Vorrichtung bei (drucklosem) Rohr 1 entfernt werden und es kann ein Anschlußelement 7 zum Anschluß eines Druckmeßgerätes in die Gewindebohrung eingeschraubt werden, in der vorher die Gewindespindel saß.

Bei der Ausführungsform gemäß Figur 6 und 7 ist die Vorgehensweise analog, wobei nach dem Anschneiden des Rohres 1 gemäß Figur 7 die Nadel 5 durch entsprechende Betätigung der Gewindespindel im entgegengesetztem Drehsinn zurückgestellt wird, so daß die Leckstelle 19 freigegeben wird. Das im Rohr 1 unter Druck anstehende Fluid kann dann entlang der Nadel 5 durch den Kanal 22 bis zu dem Anschluß für ein Druckmeßgerät (bei 7) fließen.

## Patentansprüche

1. Vorrichtung zum Anschluss eines den Druck von Fluiden messenden Gerätes an eine unter Fluiddruck stehende oder drucklose, mit Fluid beaufschlagbare Rohrleitung (1) mit einer an die Rohrleitung (1) radial dicht schließend anspannbaren Klemmschelle, in deren einem Schellenbügel (3) eine radial zum Mantel der Rohrleitung gerichtete, axial geführte Nadel (5) begrenzt axial verstellbar geführt ist, wobei die Nadel mittels einer mit dem Schellenbügel (3) gewindemäßig verbundenen Gewindespindel (6), die koaxial zur Nadellängsachse gerichtet ist, axial verschiebbar ist, und wobei vorzugsweise der Schellenbügel (3) eine Bohrung aufweist, an die ein Druckmessgerät (7) anschließbar ist und die mit der Leckstelle des Rohres (1), die durch die Nadel (5) erzeugbar ist, in leitungsoffener Verbindung steht, wobei ferner die Gewindespindel (6) eine koaxial gerichtete Sacklochbohrung (8) aufweist, in die der Schaft (9) der Nadel (5) koaxial einsteckbar ist, und zwischen dem Boden (12) der Sacklochbohrung (8) und der dem Boden (12) zugewandten Stirnfläche (13) des Schaftes (8) der Nadel (5) Zentriermittel (14) ausgebildet oder angeordnet sind, mittels derer eine Selbstzentrierung der Nadel (5) erfolgt, **dadurch gekennzeichnet, dass** die Stirnfläche (13) des Schaftes (9) der Nadel (5) konvex gewölbt oder als Zentrierkugel ausgebildet ist und zwischen dieser Stirnfläche (13) und dem Sacklochboden (12) zwei kreisringartige Tellerfedern (15) mit einer Mittellochung (21) angeordnet sind, dass die Nadel (5) im Anschluss an die Stirnfläche (13) einen ersten polygonalen Schaftbereich oder einen Rundschaft mit längsgerichteten Rippen aufweist, anschließend verjüngt ist und eine in der Sacklochbohrung (8) gehalterte, bis zu deren Mündung reichende, erste Führungshülse (17) durchsetzt, die axiale Stützrippen (18) aufweist, und nachfolgend eine im Schellenkörper (3) fixierte zweite Führungshülse (18) vorzugsweise mit geringem Spiel durchgreift, aus deren Mündung die verjüngte Spitze der Nadel (5) ausschiebbar ist, so dass ein Fluiddurchtrittsspalt von der zu erzeugenden Leckstelle (19) bis zum Boden (12) des Sackloches (8) gebildet ist, von dem die Bohrung (22) zum Anschluss eines Druckmessgerätes (7) abgeht, dass die Stirnfläche (13) des Nadelschaftes (9) mindestens einen Querschlitz (20) aufweist, der den radialen Fluiddurchtrittsspalt mit der Mittellochung (21) der Tellerfedern (15) verbindet, und dass axial vom Sacklochboden (12) die Bohrung (22) zum Anschluss eines Druckmessgerätes (7) abgeht.

2. Vorrichtung nach Anspruch 1, **dadurch gekennzeichnet, dass** die zweite Führungshülse (18) in die von der Nadel (5) durchgreifbare Bohrung des Schellenbügels (3) fest eingesetzt, oder eingepresst ist, in den Schellenbügel (3) eine der Form des umschlossenen Rohres (1) angepasste und an dessen Mantel anliegende, metallische Halbschale (23) eingelegt ist, dass die Halbschale (23) eine kreisförmige oder kreisartige Ausnehmung aufweist, in die ein O-Ring (24) eingelegt ist, dass der O-Ring (24) sich radial außen an die Randkante der Ausnehmung, an den Rohrmantel und an einen Teilbereich des Innenmantels des Schellenbügels (3) sowie radial innen an dem Außenmantel der zweiten Führungshülse (18) in dem Bereich dichtend abstützt, der axial über den Schellenbügel-Innenmantel vorragt.

3. Vorrichtung nach Anspruch 2, **dadurch gekennzeichnet, dass** die als Stützfläche für den O-Ring (24) dienende Randkante (25) der Ausnehmung der Halbschale (23) so ausgerichtet ist, dass sie Bestandteil eines Kegelmantels ist, dessen Spitze in der Mittelachse des umfassten Rohres (1) liegt.

4. Vorrichtung nach einem der Ansprüche 1 bis 3, **dadurch gekennzeichnet, dass** der Boden (12) der Sacklochbohrung (8) der Gewindespindel (6) konkav oder kegelig gehöhlt ist.

5. Vorrichtung nach einem der Ansprüche 1 bis 4, **dadurch gekennzeichnet, dass** die Nadel (5) aus gehärtetem Stahl und die Schellenbügel (3,4) aus weichem Stahl, insbesondere Automatenstahl, besteht.

## Claims

1. A device for the connection of an instrument that measures the pressure of fluids to a pipeline (1) that is subjected to fluid pressure or is non-pressurised and can be suppled with fluid, having a clamp that can be radially clamped tightly closing to the pipeline (1), in the one clamp hoop (3) of which a needle, which is radially directed to the casing of the pipeline and is axially guided, is guided in an axially adjustable manner to a limited extent, wherein the needle is axially displaceable by means of a threaded spindle (6), connected in thread-like manner to the clamp hoop (3), which is coaxially directed to the longitudinal axis of the needle, and wherein the clamp hoop (3) preferably has a bore to which a pressure meter (7) can be connected and which is in open-line communication with the leakage site of the pipe (1) that can be produced by the needle (5), wherein the threaded spindle (6) also comprises a coaxially directed blind hole bore (8) into which the shank (9) of the needle (5) can be coaxially inserted, and centring means (14) are constructed or disposed between the base (12) of the blind hole bore (8) and the end face (13) of the shank (8) of the needle (5) facing the base (12), by means of which a self-centring of the needle (5) takes place,
**characterised in that** the end face (13) of the shank (9) of the needle (5) is convexly rounded or is constructed as a centring sphere and two annular cup springs (15) having a central perforation (21) are disposed between this end face (13) and the blind hole base (12),
**in that** following the end face (13) the needle (5) comprises a first polygonal shank region or a round shank having longitudinally directed ribs, then is tapered and passes through a first guide bush (17) mounted in the blind hole bore (8) and extending to its opening, which comprises axial support ribs (18), and subsequently engages, preferably with slight clearance, through a second guide bush (18) fixed in the clamp hoop body (3), from the opening of which the tapered point of the needle (5) can be ejected so that a fluid passage aperture is formed from the leakage site (9) to be produced to the base (12) of the blind hole (8), from which the bore (22) for the connection of a pressure meter (7) departs,
**in that** the end face (13) of the needle shank (9) comprises at least one transverse slit (20), which connects the fluid passage aperture with the central perforation (21) of the cup springs (15),
**and in that** the hole (22) for the connection of a pressure meter/manometer (7) departs axially from the blind hole base (12).

2. A device according to Claim 1,
**characterised in that** the second guide bush (18) is securely inserted, or pressed, into the bore of the clamp hoop (3) through which the needle (5) can engage, a metal half-shell (23) adapted to the shape of the enclosed pipe (1) and abutting its casing is inserted into the clamp hoop (3),
**in that** the half shell (23) comprises a circular or circle-like recess into which an O-ring (24) is inserted,
**in that** the O-ring (24) is tightly supported radially outwardly on the edge of the recess, on the pipe casing and on a sub-region of the inner casing of the clamp hoop (3) and also radially inwardly on the outer casing of the second guide bush (18) in the region which projects axially over the inner casing of the clamp hoop.

3. A device according to Claim 2,
**characterised in that** the edge (25) of the recess of the half-shell (23) that serves as a support face for the 0-ring (24) is aligned so that it is a component of an envelope of a cone, the apex of which lies in the centre axis of the enclosed pipe (1).

4. A device according to one of Claims 1 to 3,
**characterised in that** the base (12) of the blind hole bore (8) of the threaded spindle (6) is concavely or conically hollowed.

5. A device according to one of Claims 1 to 4,
**characterised in that** the needle (5) is made from hardened steel and the clamp hoops (3, 4) are made from soft steel, in particular free cutting steel.

## Revendications

1. Dispositif permettant de raccorder un appareil mesurant la pression de fluides à une conduite (1) soumise à la pression d'un fluide ou non soumise à la pression d'un fluide mais pouvant recevoir un fluide, à l'aide d'un collier de serrage pouvant être fixé radialement sur la conduite (1) et assurant l'étanchéité, dans l'un des étriers (3) duquel une aiguille (5) guidée axialement et orientée radialement par rapport à l'enveloppe de la conduite est guidée de manière à pouvoir être déplacée axialement de façon limitée, sachant que l'aiguille peut être déplacée axialement au moyen d'une broche filetée (6) reliée par ses filets de vis à l'étrier du collier (3), qui est orientée coaxialement par rapport à l'axe longitudinal de l'aiguille, déplaçable axialement et sachant que l'étrier du collier (3) présente de préférence un perçage permettant de raccorder un appareil mesurant la pression (7) et communiquant directement avec le point de fuite de la conduite (1) pouvant être créé par l'aiguille (5), sachant en outre que la broche filetée (6) présente un perçage borgne (8) orienté de manière coaxiale dans lequel peut être enfoncée coaxialement la tige (9) de l'aiguille (5) et qu'entre le fond (12) du perçage borgne (8) et la surface frontale (13) de la tige (8) de l'aiguille (5) qui est tournée vers le fond (12) sont réalisés ou disposés des moyens de centrage (14) permettant un centrage automatique de l'aiguille (5), **caractérisé en ce que** la surface frontale (13) de la tige (9) de l'aiguille (5) est convexe ou est réalisée en tant que bille de centrage, et **en ce qu'**entre cette surface frontale (13) et le fond (12) du perçage borgne sont disposés deux ressorts à disques semblables à des anneaux de cercle (15) munis d'un perçage central (21), **en ce que** l'aiguille (5) présente à la suite de la surface frontale (13) un premier segment de tige polygonal ou une tige ronde avec des nervures longitudinales, puis se rétrécit avant de traverser une première douille de guidage (17) maintenue dans le perçage borgne (8) et s'étendant jusqu'à l'ouverture de ce dernier, qui présente des nervures d'appui axiales (18), puis traverse, de préférence avec un faible jeu, une seconde douille de guidage (18) fixée dans le corps du collier de serrage (3), douille de guidage de l'ouverture de laquelle il est possible de faire sortir la pointe rétrécie de l'aiguille (5), si bien qu'une fente de passage du fluide est formée depuis le point de fuite (19) à créer jusqu'au fond (12) du perçage borgne (8) dont part le perçage (22) permettant de raccorder un appareil de mesure de la pression (7), **en ce que** la surface frontale (13) de la tige (9) de l'aiguille présente au moins une fente transversale (20) qui relie la fente de passage du fluide au perçage central (21) des ressorts à disques (15), et **en ce que** le perçage (22) permettant de raccorder un appareil mesurant la pression (7) part axialement du fond (12) du perçage borgne.

2. Dispositif selon la revendication 1, **caractérisé en ce que** la seconde douille de guidage (18) est logée ou enfoncée fixement dans le perçage de l'étrier du collier (3) que l'aiguille (5) peut traverser, **en ce qu'**une demi-coquille (23) métallique adaptée à la forme du tuyau (1) qu'elle entoure et appliquée contre l'enveloppe de ce dernier est posée dans l'étrier du collier (3), **en ce que** la demi-coquille (23) présente un évidement circulaire ou semblable à un cercle dans lequel est placé un joint torique d'étanchéité (24), **en ce que** le joint torique d'étanchéité (24) prend appui radialement à l'extérieur sur l'arête du bord de l'évidement, sur l'enveloppe du tuyau et sur une partie de l'enveloppe intérieure de l'étrier du collier (3) ainsi que radialement à l'intérieur sur l'enveloppe extérieure de la seconde douille de guidage (18), de manière à réaliser l'étanchéité, dans la zone qui dépasse axialement de l'enveloppe intérieure de l'étrier du collier.

3. Dispositif selon la revendication 2, **caractérisé en ce que** l'arête du bord (25) de l'évidement de la demi-coquille (23) qui sert de surface d'appui au joint torique d'étanchéité (24) est orientée de telle manière qu'elle fait partie d'une enveloppe conique dont la pointe est située sur l'axe médian du tuyau entouré (1).

4. Dispositif selon l'une des revendications 1 à 3, **caractérisé en ce que** le fond (12) du perçage borgne (8) de la broche filetée (6) est concave ou creusé en forme de cône.

5. Dispositif selon l'une des revendications 1 à 4, **caractérisé en ce que** l'aiguille (5) est en acier trempé et les étriers du collier (3, 4) en acier doux, notamment en acier de décolletage.
